# EUROPÄISCHE PATENTSCHRIFT

(11) **EP 2 030 474 B1**
(45) Veröffentlichungstag und Bekanntmachung des Hinweises auf die Patenterteilung: **01.04.2020**
(21) Anmeldenummer: 07728589.8
(22) Anmeldetag: 27.04.2007
(51) Int. Cl.: H04Q 11/04

(54) **VERFAHREN UND ANORDNUNG ZUM AUFBAU VON KOMMUNIKATIONSBEZIEHUNGEN**
METHOD AND SYSTEM FOR ESTABLISHING COMMUNICATION RELATIONS
PROCÉDÉ ET DISPOSITIF D'ÉTABLISSEMENT DE RELATIONS DE COMMUNICATION

(30) Priorität: 26.05.2006 DE 102006024707
(43) Veröffentlichungstag der Anmeldung: 04.03.2009
(73) Patentinhaber: ADTRAN GmbH, 10557 Berlin (DE)
(72) Erfinder: BAHLS, Thomas, 17489 Greifswald (DE)
(74) Vertreter: Brachmann, Roland W.
(86) Internationale Anmeldenummer: PCT/EP2007/054134
(87) Internationale Veröffentlichungsnummer: WO 2007/137921

(56) Entgegenhaltungen:
- EP-A2- 1 359 709
- WO-A-2004/051926
- JP-A- 2006 186 737
- US-A1- 2004 244 037
- CHUNGLAE CHO ET AL: "Improvement of channel zapping time in IPTV services using the adjacent groups join-leave method" ADVANCED COMMUNICATION TECHNOLOGY, 2004. THE 6TH INTERNATIONAL CONFERENCE ON PHOENIX PARK, KOREA FEB. 9-11, 2004, PISCATAWAY, NJ, USA,IEEE, Bd. 2, 9. Februar 2004 (2004-02-09), Seiten 971-975, XP010702946 ISBN: 89-5519-119-7

## Beschreibung

Die Erfindung betrifft ein Verfahren und eine Anordnung zum Aufbau von Kommunikationsbeziehungen.

Aus [Chunglae Cho et al.: "Improvement of Channel Zapping Time in IPTV Services Using the Adjacent Groups Join-Leave Method", Advanced Communication Technology, 2004, 6. Internationale Konferenz in Korea 09.-11.02.2004, IEEE, Bd.2, 09.02.2004, Seiten 971 bis 975] ist ein Verfahren zum Aufbau von Kommunikationsbeziehungen über ein Übertragungsmedium bekannt.

EP 1 359 709 A2 betrifft die beschleunigte Bearbeitung von IGMP-Nachrichten.

WO 2004/051926 A1 betrifft das Gruppen-Wechseln und Kanal-Wechseln während der Übertragung von Multicast-Anwendungen.

In aktuellen Kommunikationsnetzen werden von den Nutzern zunehmend höhere Datenübertragungsraten gewünscht. Übertragungsverfahren, die hohe Übertragungsraten auch in den Teilnehmeranschlussnetzen (Access-Networks) eines Kommunikationsnetzes bereitstellen können, sind beispielsweise Verfahren, die nach dem xDSL-Verfahren arbeiten. Mit Hilfe dieser Übertragungsverfahren können die Betreiber von Kommunikationsnetzen ihren Kunden auch breitbandige Anschlüsse beispielsweise an das Internet anbieten, mittels derer die Teilnehmer zahlreiche Anwendungen oder Applikationen zunehmend einfacher und schneller nutzen können. Ein Beispiel für eine derartige datenintensive Anwendung, für die hohe Übertragungsraten benötigt werden, ist etwa die Übertragung von echtzeitrelevanten Multimedia-Dateien.

Insbesondere werden zukünftig dabei auch beispielsweise gängige Fernseh-Programme zunehmend über paketorientierte Kommunikationsnetze, wie etwa ein IP-Netz (IP: "Internet Protocol"), übertragen. Dieser Service gilt als Teil des so genannten "Triple-Plays", was bedeutet, dass drei - ursprünglich getrennte - Datendienste (Telefon, Internet, Fernsehen) über dasselbe Kommunikationsnetz übermittelt werden.

Dabei werden bei Fernsehübertragungen über ein IP-Netz ("IP-TV") die Informationen meistens in so genannten "Streams" übertragen. Das bedeutet, dass ein zentraler Server die Fernsehprogramme in einen durchgängigen Fluss aus Daten übersetzt (die Programme werden "gestreamt") und diese Datenflüsse an einzelne Teilnehmer verteilt. Der Datenfluss wird im Rahmen eines solchen Verteildienstes von den einzelnen Teilnehmern empfangen, zurückgewandelt und anschließend auf einem Bildschirm angezeigt.

Um diese Art der Fernsehübertragung erfolgreich anbieten zu können, gilt es jedoch zu beachten, dass den Teilnehmern bzw. den Kunden auch bei einem solchen Streaming-Verfahren mindestens dieselbe Qualität der Fernsehbilder zur Verfügung gestellt wird, wie das bei aktuellen TV-Netzen (Kabel, Satellit, Antenne) der Fall ist.

Das bedeutet im Speziellen, dass einerseits beispielsweise eine ausreichende Bildqualität erreicht wird. Gerade bei Video-Übertragungen schlagen sich Übertragungsfehler in leicht zu erkennenden und daher extrem störenden Fehlern in der Bilddarstellung aus. So kann das Bild beispielsweise unscharf erscheinen, oder es treten so genannte Blockfehler auf, d.h. einzelne Teile oder Blöcke des Bildes werden falsch dargestellt.

Andererseits muss für ein erfolgreiches Anbieten von IP-TV jedoch auch gewährleistet sein, dass weitere Leistungen oder Eigenschaften, die die Teilnehmer von herkömmlichen Fernsehübertragungsnetzen gewohnt sind, auch bei IP-TV angeboten werden. Eine dieser Eigenschaften ist dabei eine möglichst geringe Umschaltzeit beim Umschalten zwischen zwei Fernsehprogrammen.

Während dies bei herkömmlichen TV-Netzen üblich ist, da in diesen Netzen alle empfangbaren Programme gleichzeitig am Anschluss des Teilnehmers anliegen, verhält es sich bei IPbasierten (oder Ethernet-) Netzen anders: In derartigen Netzen liegen immer nur die angeforderten Programme am Anschluss eines Teilnehmers an. Grundsätzlich teilt ein Teilnehmer in einem IP-Netz einem zentralen Server mit, dass er einen bestimmten Stream (ein bestimmtes Fernsehprogramm) empfangen möchte, d.h. der Teilnehmer stellt eine Anfrage nach einer Kommunikationsverbindung mit diesem Server. Daraufhin leitet der Server den entsprechenden Stream an den Teilnehmer weiter. Bei einem Umschaltvorgang, was einem Wechsel des Streams entspricht, muss dieses Umschalten daher erst mittels verschiedener Protokolle dem Server mitgeteilt und schließlich von dem Server (bzw. von zwei Servern, falls beide Streams von unterschiedlichen Servern stammen) durchgeführt werden. Bei jedem Umschalten des Fernsehprogramms muss somit ein neuer Stream angefordert und angelegt werden (bzw. eine neue Kommunikationsverbindung eingegangen werden), ein Verfahren, das aufwendiger ist und daher mehr Zeit benötigt als das Umschalten in herkömmlichen TV-Netzen.

In aktuellen IP-Netzen wird das Verteilen eines Streams auf einen oder mehrere Teilnehmer mittels so genannter Mehrpunkt-verbindungen erreicht. Dabei kann ein Datenstrom von einem Ausgangspunkt bzw. Sender (beispielsweise einem zentralen Server innerhalb des IP-Netzes) gleichzeitig an mehrere Empfänger oder Teilnehmer übermittelt werden. Es handelt sich dabei um eine "Punkt-zu-Mehrpunkt"-Verbindung bzw. um ein so genanntes "Multicast"-Verfahren oder eine Multicast-Übertragung.

Multicast-Übertragungen werden aktuell zumeist mittels des "Internet Group Management Protokolls" (IGMP) gesteuert. Das IGMP basiert auf dem Internet Protokoll und ermöglicht Gruppenkommunikation. Bei einer Multicast-Übertragung ("Multicasting") werden einzelne IP-Pakete gleichzeitig unter einer IP-Adresse an mehrere Stationen (an eine Gruppe von Stationen) verteilt. Um die aufkommende Datenmenge dabei möglichst zu reduzieren, bietet das IGMP die Möglichkeit, dynamisch Gruppen zu verteilen. Einzelne Teilnehmer oder Anschlüsse werden also bestimmten Gruppen mit einem bestimmten Angebot zugeteilt. Die Verwaltung dieser Gruppen findet jedoch nicht in der Sendestation statt, sondern beispielsweise in einzelnen Netzknoten oder in den Routern auf dem Weg zum Empfänger. Dafür werden in den Routern Informationen darüber gespeichert, an welcher ausgehenden Schnittstelle sich eine Station bzw. ein Anschluss befindet, an den bestimmte Multicast-IP-Pakete weitergeleitet werden sollen. Im IGMP sind Funktionen implementiert, mit denen beispielsweise die Router untereinander kommunizieren können und mit denen Stationen einem Router mitteilen können, dass der entsprechende Teilnehmer bestimmte Multicast-IP-Pakete empfangen möchte.

Bei derartig verwalteten Mehrpunkt-Verbindungen ist somit im Sender zumeist nicht bekannt, welche oder auch wie viele Teilnehmer dessen IP-Pakete empfangen. Vom Sender wird laut IGMP nur ein einziges Datenpaket an den entsprechenden übergeordneten Router versendet. Erst innerhalb der einzelnen Router des Kommunikationsnetzes werden die IP-Pakete schließlich bei Bedarf vervielfacht. Dies geschieht abhängig von der Anzahl der an den jeweiligen Routern angeschlossenen Stationen, die die entsprechenden IP-Pakete empfangen sollen. Es müssen somit alle an der Kommunikation beteiligte Netzknoten ein Multicast-Protokoll wie IGMP unterstützen.

Neben zahlreichen anderen Protokollbefehlen existieren bei Multicast-Protokollen auch Befehle zum Anfordern von IP-Paketen: Mittels des so genannten "join"-Befehls ("JoinGroup") beantragt beispielsweise ein Teilnehmer die Mitgliedschaft in einer Gruppe, d.h. der Teilnehmer verlangt etwa nach einem bestimmten Stream oder Fernsehprogramm, er wird daraufhin zu einem weiteren Empfänger der entsprechenden IP-Pakete.

Wird von einem Teilnehmer das Austreten aus einer Gruppe, in der er gerade Mitglied ist, gewünscht, so kann dies gemäß dem Stand der Technik nach verschiedenen Verfahren erfolgen. Zum einen kann dies Timer-gesteuert erfolgen (z.B. IGMP Version 1), zum anderen kann eine Mitgliedschaft mit einem geeigneten Befehl aber auch direkt beendet werden (z.B. IGMP, Version 2). Bei Timer-gesteuerten Verfahren (wie dem IGMPv1, bei dem kein Beendigungsbefehl existiert) werden protokollgemäß von einer Teilnehmereinrichtung in vorgegebenen Zeitabständen Informationen an den entsprechenden übergeordneten Knoten gesendet, die anzeigen, dass der jeweilige Teilnehmer weiterhin Mitglied in der besagten Gruppe bleiben möchte. Für den Fall, dass innerhalb der vorgegebenen Zeitspanne keine derartige Information am Netzknoten empfangen wird (wenn der Timer im Netzknoten abgelaufen ist), wird die Verbindung durch den Netzknoten beendet.

In anderen Multicast-Protokollen existieren zum bewussten Beenden einer Mitgliedschaft bestimmte Befehle (z.B. IGMPv2: "LeaveGroup"). Obwohl in solchen Fällen also die Möglichkeit besteht, bestimmte Gruppen gezielt zu verlassen, so arbeiten zahlreiche aktuelle Multicast-Implementierungen, wie unter anderem etwa aktuelle Set-Top-Boxen, doch auch weiterhin ohne dieses "leave"-Kommando. Auch in derartigen Fällen wird das Austreten aus einer Gruppe dann über Timer geregelt.

Eine weitere Möglichkeit zum Beenden einer Mitgliedschaft in einer Gruppe ist das so genannte "Fast Leave". Dabei handelt es sich um ein implizites Beenden der Mitgliedschaft. Dies bedeutet, dass jeweils bei einer neuen "join"-Anfrage durch einen Teilnehmer, also immer dann, wenn der Teilnehmer beispielsweise ein neues Fernsehprogramm beantragt, die vorherige Mitgliedschaft in einer anderen Gruppe automatisch beendet wird. Dieses Verfahren lässt sich jedoch nur in seltenen Fällen anwenden, da eine Voraussetzung hierfür ist, dass der Teilnehmer jeweils nur einen einzigen Daten-Stream anliegen hat oder haben will.

Eine Verwaltung der einzelnen Teilnehmer und deren Gruppenzugehörigkeit, also ein Management der Multicast-Verbindungen, kann dabei beispielsweise auch zentral geschehen. So kann z.B. in einer zentralen Verwaltungseinheit oder auch im DSLAM selbst gespeichert werden, welche angeschlossenen Teilnehmer welche IP-Datenströme abonniert haben bzw. welchen Gruppen sie angehören. Dafür kann beispielsweise eine Tabelle angelegt werden, in der für jeden Teilnehmeranschluss oder auch für jede "Media Access Control" - Adresse (MAC-Adresse) die im Moment abonnierten IP-Streams abgelegt werden. D.h. selbst für den Fall, dass an einer Teilnehmerleitung mehrere Endgeräte angeschlossen sind, wird die Gruppenzugehörigkeit jedes einzelnen Endgeräts mittels der für jedes an ein Ethernet angeschlossenes Gerät eindeutigen MAC-Adresse protokolliert. Die Informationen über die Gruppenzugehörigkeit können direkt im DSLAM beispielsweise über das Mitlesen des IGMP erfasst werden("IGMP-Snooping").

In den meisten Fällen ergibt sich beim Austreten aus einer Gruppe, bzw. beim Abonnieren einer neuen Gruppe, insbesondere bei den oben erwähnten IP-TV-Anwendungen folgender Nachteil: Wird von einem Teilnehmer eine neue Gruppe abonniert, so werden zuvor abonnierte Gruppen nicht immer automatisch verlassen. Dies führt dazu, dass die neuen Anwendungen zumeist nicht sofort auf die erforderliche Bandbreite zurückgreifen können, da ein Teil der vorhandenen Bandbreite noch für die vorherige, nicht mehr erwünschte Anwendung reserviert ist. Gerade bei beispielsweise IP-TV führt dies zu einer Erweiterung des oben erläuterten Problems der längeren Umschaltzeiten, da das neu gewählte Programm erst dann angezeigt werden kann, wenn die für das Anzeigen der vorherigen Programme erforderlichen Übertragungsressourcen zuvor wieder freigegeben wurden.

Die der Erfindung zugrunde liegende Aufgabe ist somit unter anderem, die Bereitstellung von Multimedia-Verteildiensten zu verbessern.

Diese Aufgabe wird ausgehend von einem Verfahren gemäß dem Oberbegriff des Patentanspruchs 1 durch dessen kennzeichnende Merkmale sowie von einer Anordnung gemäß dem Oberbegriff von Anspruch 9 durch dessen kennzeichnende Merkmale gelöst.

Bei dem erfindungsgemäßen Verfahren ist ein Verfahren zum Aufbau von Kommunikationsbeziehungen über ein Übertragungsmedium, wobei bereits zumindest eine Kommunikationsbeziehung über das Übertragungsmedium aufgebaut ist. Der wesentliche Aspekt des Verfahrens ist, dass jeweils Anfragen zum Aufbau von jeweils einer Kommunikationsbeziehung betreffende Informationen erfasst werden und in Abhängigkeit von zumindest zwei erfassten Informationen zumindest eine der zumindest einen bereits aufgebauten Kommunikationsbeziehung beendet oder aufrechterhalten wird und dass die zumindest eine bereits aufgebaute Kommunikationsbeziehung (stream1, stream2) beendet wird, wenn die Zeitspanne unter einem vorgebbaren Grenzwert liegt.

Der wesentliche Vorteil des erfindungsgemäßen Verfahrens ist, dass einzelne Kommunikationsbeziehungen schneller abgebaut werden können, falls diese nicht mehr benötigt werden. Dadurch kann Bandbreite eingespart werden.

Vorteilhaft können die erfassten Informationen Zeitpunkte der Anfragen umfassen. Dabei kann die zumindest eine bereits aufgebaute Kommunikationsbeziehung in Abhängigkeit von einer zwischen zumindest zwei erfassten Zeitpunkten vergangenen Zeitspanne beendet oder aufrechterhalten werden - Ansprüche 2 und 3. Dadurch kann beispielsweise anhand der Länge der zwischen zwei Anfragen vergangenen Zeitspanne auf die Art des angeforderten und der bereits aufgebauten Datenströme geschlossen werden.

Weitere vorteilhafte Ausführungen des erfindungsgemäßen Verfahrens sowie eine Anordnung zum Aufbau von Kommunikationsbeziehungen sind den Unteransprüchen zu entnehmen.

Im Folgenden wird die Erfindung mit Hilfe der beigefügten Zeichnungen detaillierter erläutert.

Dabei zeigt:
- Figur 1: in einem Blockschaltbild eine schematische Darstellung eines Teilnehmerzugangsnetzes,
- Figur 2: den zeitlichen Verlauf des Bandbreitenbedarfs mehrerer IP-Datenströme am Teilnehmeranschluss, und
- Figur 3: ein Flussdiagramm eines beispielhaften Ablaufs des erfindungsgemäßen Verfahrens.

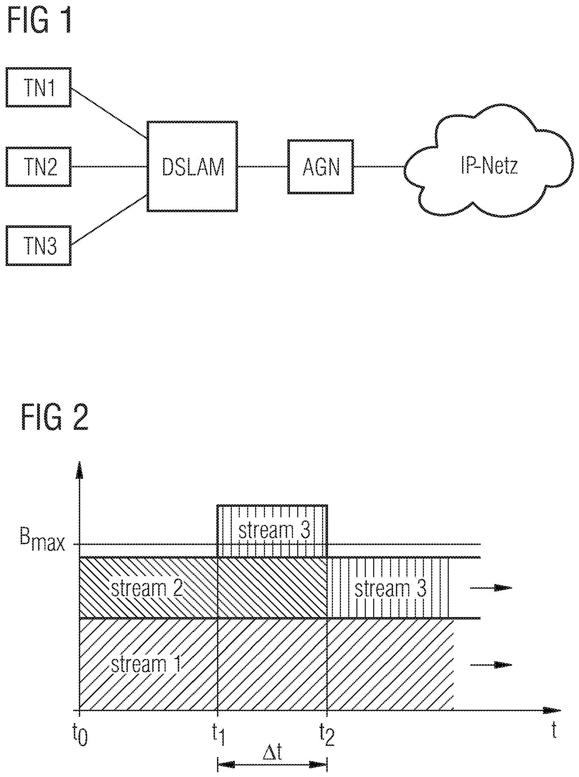

Fig.1 zeigt beispielhaft schematisch einen Aufbau eines Teilnehmeranschlussnetzes eines aktuellen Kommunikationsnetzes. Drei Teilnehmer TN1, TN2 und TN3 sind über jeweils eine Teilnehmeranschlussleitung DSL1, DSL2 bzw. DSL3 mit einem ersten vermittlungsseitigen Netzknoten verbunden, einem so genannten "Digital Subscriber Line Access Multiplexer" (DSLAM). Dieser DSLAM fasst Daten von den angeschlossenen Teilnehmer zusammen ("Multiplexing") und sendet die gesammelten Daten weiter an das angeschlossene Kommunikationsnetz. Ferner verteilt der DSLAM ebenso jene Daten, die in entgegengesetzter Richtung übermittelt werden, die also aus dem übergeordneten Netz stammen, an die entsprechenden Teilnehmer. Netzseitig ist der DSLAM mit einem "Aggregation Network" (AGN) verbunden, welches die Aufgabe hat, mehrere an dieses Netzwerk angeschlossene DSLAMs (in Fig. 1 nicht gezeigt) schließlich mit dem Hauptdatennetz (in Fig. 1 ist dies beispielsweise ein IP-Netz) zu verbinden.

Fig. 2 verdeutlicht ein der Erfindung zugrunde liegendes Problem anhand einer schematischen graphischen Darstellung mehrerer IP-Datenströme. In Fig. 2 ist eine Verteilung von drei an einem Teilnehmeranschluss anliegenden Datenströmen (stream1, stream2, stream3) über die Zeit (horizontaler Verlauf) graphisch dargestellt. Die Höhe der einzelnen Datenströme repräsentiert die von den jeweiligen Datenströmen benötigte Bandbreite. Außerdem ist in Fig. 2 eine maximale für den entsprechenden Teilnehmer zur Verfügung stehende Bandbreite (Bₘₐₓ) eingezeichnet.

Zum Zeitpunkt t₀ liegen am betrachteten Anschluss (z.B. TN1 aus Fig. 1) zwei IP-Datenströme (stream1, stream2) an. TN1 hat also aktuell zwei Gruppen abonniert, bzw. TN1 ist aktuell in zwei Gruppen Mitglied. Dabei kann es sich bei stream1 um eine beliebige Multicast-Anwendung handeln, während in diesem Beispiel für stream2 angenommen sei, dass es sich bei diesem Stream (stream2) um Fernsehdaten handelt. Es werden somit in diesem Beispiel zum Zeitpunkt t₀ über dieselbe Teilnehmeranschlussleitung (DSL1) an denselben Teilnehmeranschluss (TN1) zwei Multicast-Anwendungen übermittelt, wobei stream2 eine IP-TV-Anwendung repräsentiert. Streaml und stream2 benötigen dabei zusammen nicht die gesamte auf der Teilnehmeranschlussleitung zur Verfügung stehende Bandbreite.

Zum Zeitpunkt t₁ abonniert Teilnehmer TN1 eine weitere, dritte Multicast-Gruppe (stream3), d.h. es wird von Teilnehmer TN1 eine "join"-Anfrage für Gruppe 3, in diesem Fall ein weiteres Fernsehprogramm, an den DSLAM gesendet. Anschließend wird der dieses weitere Fernsehprogramm übermittelnde Datenstrom an Teilnehmeranschlussleitung DSL1 von Teilnehmer TN1 angelegt.

Wie in Fig. 2 zu sehen ist, liegen daraufhin an Teilnehmeranschlussleitung DSL1 von Teilnehmer TN1 gleichzeitig drei Multicast-Datenströme (stream1, stream2, stream3) an. Da die vorhandene Bandbreite auf DSL1 jedoch geringer ist als die für alle drei Ströme benötigte Bandbreite, kann das neu abonnierte Fernsehprogramm (stream3) von Teilnehmer TN1 noch nicht komplett bzw. in hinreichender Qualität übertragen und somit bei Teilnehmer TN1 ungestört angezeigt werden.

Dies ist erst ab jenem Zeitpunkt (t₂) möglich, zu dem Datenstrom 2 (stream2) auf Teilnehmeranschlussleitung DSL1 beendet wird. Wie in der Beschreibungseinleitung erläutert, kann Datenstrom 2 (stream2) bei Nutzung von beispielsweise IGMPv1 jedoch erst nach Ablauf eines Timers beendet werden. Auch kann in diesem Beispiel stream2 nicht sofort bei Beantragung von stream3 implizit beendet werden, da bereits mehrere Multicast-Datenströme anliegen (stream1 und stream2). Somit ist nicht bestimmt, welcher der beiden anliegenden Streams beendet werden sollte, es ist also kein "FastLeave" möglich. Für derartige Fälle, bei denen der vorherige Datenstrom (stream2) also erst nach einer gewissen Zeitspanne (Δt = t₂ - t₁) beendet werden kann, und auch für solche Fälle, bei denen aus bestimmten Gründen das "LeaveGroup"-Kommando bewusst nicht verwendet werden kann oder soll, ergibt sich somit nachteilig eine verlängerte, von Nutzern zumeist als störend empfundene Umschaltzeit (Δt).

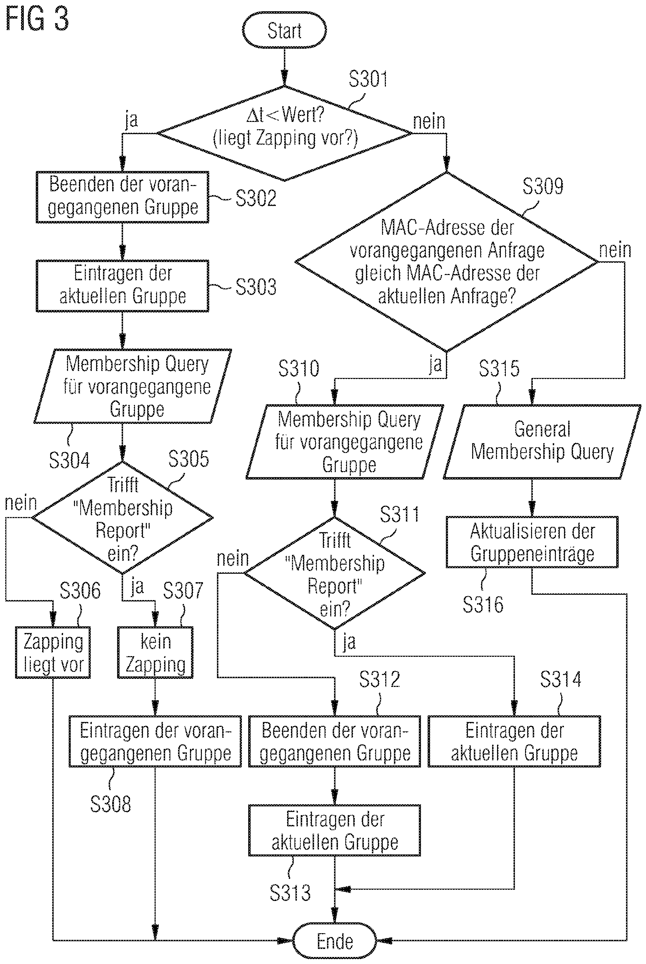

Diese wird, wie im Folgenden beschrieben, durch das erfindungsgemäße Verfahren erheblich verringert. Der beispielhafte Ablauf des Verfahrens wird dabei mit Hilfe des Flussdiagramms aus Fig. 3 erläutert.

Bei dem erfindungsgemäßen Verfahren wird in einem ersten Abschnitt beispielsweise untersucht, ob es sich bei einer neuen, also aktuellen, vom Teilnehmer gesendeten Anfrage nach einem Stream ("JoinGroup"-Kommando) um ein schnelles Um- oder Durchschalten von Fernsehprogrammen (so genanntes "Zapping") handelt. Um dies festzustellen wird erfindungsgemäß die Zeit zwischen zwei join-Befehlen gemessen (S301). Liegt der gemessene Wert unter einem vorgebbaren Schwellenwert, z.B. 2 Sekunden, so wird auf Zapping erkannt. Es wird also erfindungsgemäß in einem solchen Fall davon ausgegangen, dass bei vielen aufeinander folgenden und in kurzen Zeitabständen empfangenen join-Kommandos der Teilnehmer zahlreiche Fernsehprogramme der Reihe nach durchschaltet. Wird auf ein derartiges Zapping erkannt, so wird gemäß der Erfindung die Mitgliedschaft des entsprechenden Teilnehmers in der zuvor abonnierten Gruppe direkt beendet (S302). Es wird somit nicht bis zum Ablauf eines Timers gewartet. Des Weiteren wird in Schritt S303 die neu abonnierte Gruppe in die Verwaltungstabelle eingetragen.

Optional kann nach Schritt S303 noch eine Überprüfung der zuvor (in den Schritten S302 und S303) vorgenommenen Änderungen in den Gruppenzugehörigkeiten vorgenommen werden. Dazu wird überprüft, ob die soeben gelöschte Gruppe vom Teilnehmer nicht doch weiterhin gewünscht wird, d.h. ob die Annahme, dass es sich um Zapping handelt, falsch war. Hierzu wird, angestoßen beispielsweise direkt vom DSLAM, eine so genannter "Membership Query" nur für die entsprechende Gruppe und nur an den betreffenden Teilnehmer-Port gesendet (S304). Diese erfordert als Gegenantwort eine Bestätigung(S305), falls die entsprechende Gruppe weiterhin gewünscht wird. Bleibt diese Antwort aus, so war die Annahme, dass es sich um Zapping handelt, richtig (S306). Erreicht den DSLAM jedoch eine Gegenantwort ("Membership Report"), so kann darauf geschlossen werden, dass wider Erwarten kein Zapping vorliegt (S307) und die entsprechende Gruppe kann sofort erneut in die Verwaltungstabelle eingetragen werden (S308). Diese zusätzliche Interaktion bereinigt einen etwaigen Fehlerfall sofort, ein Fehler würde also noch weit vor der nächsten routinemäßig vom Multicast-Router gesendeten Membership Query behoben werden.

Wird in Schritt S301 ermittelt, dass es sich bei der aktuellen Anfrage nach einer neuen Gruppe vermutlich nicht um Zapping handelt, d.h. liegt die Zeit zwischen zwei Anfragen über dem vorgebbaren Schwellenwert, so können erfindungsgemäß optional weitere Schritte eingeleitet werden, um die Umschaltzeit zu verkürzen. Beispielsweise kann überprüft werden, ob der neue Abonnementswunsch von derselben MAC-Adresse stammt wie der vorangegangene (S309). Ist dies der Fall kann auch hier - trotz der leicht längeren Zeitspanne zwischen den Anfragen - davon ausgegangen werden, dass es sich bei den Anfragen um Anfragen nach IP-TV-Datenströmen handelt. Es kann also auch hier beispielsweise direkt auf "Zapping" entschieden und anschließend versucht werden, durch direktes Löschen der vorangegangenen Gruppenmitgliedschaft ein annähernd verzögerungsfreies Umschalten zu erreichen. Allerdings bietet es sich in einem solchen Fall an, die getätigte Annahme sicherheitshalber zuerst zu überprüfen. Laut dem Flussdiagramm in Fig. 3 wird dazu erfindungsgemäß beispielsweise mittels einer direkt im Anschluss gesendeten Membership Query nachgefragt, ob die vorangegangene, evtl. zu löschende Gruppe weiterhin benötigt wird (S310). Ist dies nicht der Fall, wird also erwartungsgemäß in Schritt S311 kein Membership Report empfangen, so wird die vorangegangene Mitgliedschaft beendet (S312) und die aktuelle Gruppe neu eingetragen (S313). Wird die vorangegangene Gruppe jedoch weiterhin benötigt, trifft in Schritt S311 also ein Membership Report ein, so wird die neu abonnierte Gruppe zusätzlich in die Verwaltungstabelle aufgenommen (S314), der Teilnehmer abonniert demnach einen weitern Stream. Es wird also eine neue, zusätzliche Kommunikationsverbindung aufgebaut.

Wird in Schritt S309 im Flussdiagramm aus Fig. 3 festgestellt, dass die beiden letzten Anfragen nicht von derselben MAC-Adresse stammen, kann keine Vermutung bezüglich der zu löschenden Gruppen angestellt werden. In diesem Fall kann jedoch vom DSLAM beispielsweise eine "General Membership Query", d.h. eine Membership Query für alle angeschlossenen Teilnehmer, angestoßen werden (S315). Dies entspricht einer Membership Query für jede einzelne Gruppe. Durch diese zentrale General Membership Query können somit anschließend abhängig von den auftretenden Rückantworten alle Gruppeneinträge innerhalb der Verwaltungstabelle aktualisiert werden (S316). Auch durch eine solche direkt nach einer Anfrage gestarteten General Membership Query kann Umschaltzeit gespart werden. Diese kann erfindungsgemäß natürlich nicht nur an dem in diesem Ausführungsbeispiel dargestellten Zeitpunkt durchgeführt werden, sondern zu jedem beliebigen Zeitpunkt, insbesondere in den Fällen, in denen nicht eindeutig ermittelt werden kann, ob es sich bei einer Anfrage um Zapping handelt oder nicht.

Des Weiteren sei angemerkt, dass erfindungsgemäß zum Ermitteln von Zapping nicht ausschließlich die Zeitspanne zwischen zwei direkt aufeinander folgenden Anfragen ermittelt werden muss. Es kann erfindungsgemäß auch die zwischen mehreren aufeinander folgenden Anfragen vergangene Zeit überprüft werden. Zusätzlich können auch die Zeitspannen zwischen einzelnen Anfragen bezüglich bestimmter Teilnehmer-Anschlüsse bzw. Teilnehmer-Ports und auch einzelner MAC-Adressen betrachtet werden. In der Verwaltungstabelle werden in einem solchen Fall beispielsweise alle Anfragen sortiert nach den einzelnen Adressen gespeichert und das erfindungsgemäße Verfahren wird für jeden Teilnehmer bzw. jede MAC-Adresse einzeln angewendet.

## Patentansprüche

1. Verfahren zum Aufbau von Kommunikationsbeziehungen (stream1, stream2, stream3) über ein Übertragungsmedium,
- wobei bereits zumindest eine Kommunikationsbeziehung (stream1, stream2) über das Übertragungsmedium aufgebaut ist,
**dadurch gekennzeichnet,**
- **dass** jeweils Anfragen zum Aufbau von jeweils einer Kommunikationsbeziehung (stream1, stream2, stream3) betreffende Informationen erfasst werden und in Abhängigkeit von zumindest zwei erfassten Informationen zumindest eine der zumindest einen bereits aufgebauten Kommunikationsbeziehung (stream1, stream2) beendet oder aufrechterhalten wird,
- **dass** die erfassten Informationen Zeitpunkte (t₁) der Anfragen umfassen,
- **dass** die zumindest eine bereits aufgebaute Kommunikationsbeziehung (stream1, stream2) in Abhängigkeit von der zwischen zumindest zwei erfassten Zeitpunkten (t₁) vergangenen Zeitspanne beendet oder aufrechterhalten wird und
- **dass** die zumindest eine bereits aufgebaute Kommunikationsbeziehung (stream1, stream2) beendet wird, wenn die Zeitspanne unter einem vorgebbaren Grenzwert liegt.

2. Verfahren nach einem der vorherigen Ansprüche,
**dadurch gekennzeichnet,**
**dass** die erfassten Informationen Informationen zur Identifikation zumindest eines die Anfrage stellenden Teilnehmers (TN1, TN2, TN3) umfassen.

3. Verfahren nach einem der vorherigen Ansprüche,
**dadurch gekennzeichnet,**
**dass** die die Anfragen betreffenden Informationen Informationen zur Identifikation zumindest eines die Anfrage stellenden Teilnehmerendgeräts umfassen.

4. Verfahren nach einem der vorherigen Ansprüche,
**dadurch gekennzeichnet,**
**dass** die Kommunikationsbeziehungen (stream1, stream2, stream3) zwischen einer zentralen Einheit und zumindest einem Teilnehmeranschluss aufgebaut und beendet werden.

5. Verfahren nach einem der vorherigen Ansprüche,
**dadurch gekennzeichnet,**
**dass** die Kommunikationsbeziehungen (stream1, stream2, stream3) im Rahmen einer Punkt-zu-Mehrpunkt-Verbindung aufgebaut und beendet werden.

6. Verfahren nach einem der vorherigen Ansprüche,
**dadurch gekennzeichnet,**
**dass** zumindest eine der Kommunikationsbeziehungen (stream1, stream2, stream3) im Rahmen einer Übertragung von Fernsehprogrammen mittels des Internet Protokolls aufgebaut wird.

7. Anordnung zum Aufbau von Kommunikationsbeziehungen (stream1, stream2, stream3) über ein Übertragungsmedium,
- wobei bereits zumindest eine Kommunikationsbeziehung (stream1, stream2) über das Übertragungsmedium aufgebaut ist,
**dadurch gekennzeichnet,**
- **dass** Erfassungsmittel vorgesehen sind zum jeweiligen Erfassen von Anfragen zum Aufbau von jeweils einer Kommunikationsbeziehung (stream1, stream2, stream3) betreffenden Informationen und Mittel zum Beenden oder Aufrechterhalten von zumindest einer der zumindest einen bereits aufgebauten Kommunikationsbeziehung (stream1, stream2) in Abhängigkeit von zumindest zwei erfassten Informationen,
- **dass** die Erfassungsmittel derart ausgestaltet sind, dass die erfassten Informationen Zeitpunkte (t₁) der Anfragen umfassen und
- **dass** die Mittel zum Beenden oder Aufrechterhalten derart ausgestaltet sind, dass die zumindest eine bereits aufgebaute Kommunikationsbeziehung (stream1, stream2) beendet wird, wenn eine zwischen zumindest zwei erfassten Zeitpunkten (t₁) vergangene Zeitspanne unter einem vorgebbaren Grenzwert liegt.

## Claims

1. Method for setting up communication relations (stream1, stream2, stream3) via a transmission medium,
- wherein at least one communication relation (stream1, stream2) has already been set up via the transmission medium
**characterized**
- **in that** items of information relating to quests to set up a respective communication relation (stream1, stream2, stream3) are respectively captured and at least two captured items of information are taken as a basis for terminating or maintaining at least one of the at least one communication relation (stream1, stream2) already set up,
- **in that** the captured items of information comprise times (t₁) of the requests,
- **in that** the at least one communication relation (stream1, stream2) already set up is terminated or maintained on the basis of the period of time that has elapsed between at least two captured times (t₁), and
- **in that** the at least one communication relation (stream1, stream2) already set up is terminated if the period of time is below a prescribable limit value.

2. Method according to one of the preceding claims,
**characterized**
**in that** the captured items of information comprise items of information for identifying at least one subscriber (TN1, TN2, TN3) making the request.

3. Method according to either of the preceding claims,
**characterized in that**
**in that** the items of information relating to the requests comprise items of information for identifying at least one subscriber terminal making the request.

4. Method according to one of the preceding claims,
**characterized**
**in that** the communication relations (stream1, stream2, stream3) are set up and terminated between a central unit and at least one subscriber line.

5. Method according to one of the preceding claims,
**characterized**
**in that** the communication relations (stream1, stream2, stream3) are set up and terminated within the framework of a point-to-multipoint connection.

6. Method according to one of the preceding claims,
**characterized**
**in that** at least one of the communication relations (stream1, stream2, stream3) is set up within the framework of a transmission of television programmes by means of the Internet Protocol.

7. Arrangement for setting up communication relations (stream1, stream2, stream3) via a transmission medium,
- wherein at least one communication relation (stream1, stream2) has already been set up via the transmission medium,
**characterized**
- **in that** there is provision for capture means for respectively capturing items of information relating to requests to set up a respective communication relation (stream1, stream2, stream3) and for means for terminating or maintaining at least one of the at least one communication relation (stream1, stream2) already set up on the basis of at least two captured items of information,
- **in that** the capture means are configured such that the captured items of information comprise times (t₁) of the requests, and
- **in that** the means for terminating or maintaining are configured such that the at least one communication relation (stream1, stream2) already set up is terminated if a period of time that has elapsed between at least two captured times (t₁) is below a prescribable limit value.

## Revendications

1. Procédé d'établissement de relations de communication (stream1, stream2, stream3) au moyen d'un support de transmission,
- dans lequel au moins une relation de communication (stream1, stream2) est déjà établie au moyen du support de transmission,
**caractérisé**
- **en ce que** des informations concernant des requêtes d'établissement d'une relation de communication (stream1, stream2, stream3) respective sont détectées et au moins l'une de la ou des relations de communication (stream1, stream2) déjà établies est interrompue ou maintenue en fonction d'au moins deux informations détectées,
- **en ce que** les informations détectées comprennent des instants (t₁) des requêtes,
- **en ce que** ladite au moins une relation de communication (stream1, stream2) déjà établie est interrompue ou maintenue en fonction de l'intervalle de temps écoulé entre au moins deux instants détectés (t₁) et
- **en ce que** ladite au moins une relation de communication déjà établie (stream1, stream2) est interrompue lorsque l'intervalle de temps est inférieur à une valeur limite prédéfinissable.

2. Procédé selon l'une des revendications précédentes,
**caractérisé en ce que** les informations détectées comprennent des informations permettant l'identification d'au moins un abonné (TN1, TN2, TN3) effectuant la requête.

3. Procédé selon l'une des revendications précédentes, **caractérisé en ce que** les informations concernant les requêtes comprennent des informations permettant l'identification d'au moins un terminal d'abonné effectuant la requête.

4. Procédé selon l'une des revendications précédentes, **caractérisé en ce que** les relations de communication (stream1, stream2, stream3) entre une unité centrale et au moins un terminal d'abonné sont établies et interrompues.

5. Procédé selon l'une des revendications précédentes,
**caractérisé en ce que** les relations de communication (stream1, stream2, stream3) sont établies et interrompues dans le cadre d'une connexion point à multipoint.

6. Procédé selon l'une des revendications précédentes,
**caractérisé en ce qu'**au moins l'une des relations de communication (stream1, stream2, stream3) est établie dans le cadre d'une transmission de programmes de télévision au moyen du protocole Internet.

7. Dispositif d'établissement de relations de communication (stream1, stream2, stream3) au moyen d'un support de transmission,
- dans lequel au moins une relation de communication (stream1, stream2) est déjà établie au moyen du support de transmission,
**caractérisé**
- **en ce qu'**il est prévu des moyens de détection permettant de détecter respectivement des informations concernant des requêtes d'établissement d'une relation de communication (stream1, stream2, stream3) respective et des moyens permettant d'interrompre ou de maintenir au moins l'une de la ou des relations de communication (stream1, stream2) déjà établies en fonction d'au moins deux informations détectées,
- **en ce que** les moyens de détection sont conçus de manière à ce que les informations détectées comprennent les instants (t₁) des requêtes et
- **en ce que** les moyens d'interruption ou de maintien sont conçus de manière à ce que ladite au moins une relation de communication (stream1, stream2) déjà établie soit interrompue lorsqu'un intervalle de temps qui s'est écoulé entre au moins deux instants (t₁) détectés est inférieur à une valeur limite prédéfinissable.
